# EUROPEAN PATENT SPECIFICATION

(11) **EP 2 453 665 B1**
(45) Date of publication and mention of the grant of the patent: **12.08.2015**
(21) Application number: 11185302.4
(22) Date of filing: 14.10.2011
(51) Int. Cl.: H04N 21/414, H04N 21/81, H04N 21/41

(54) **Web browser as second display control device**
Webbrowser als zweite Anzeigesteuervorrichtung
Navigateur Internet en tant que deuxième dispositif de contrôle d'affichage

(30) Priority: 10.11.2010 US 412328 P; 30.12.2010 US 982419
(43) Date of publication of application: 16.05.2012
(73) Proprietor: Sony Corporation, Tokyo 108-0075 (JP); Sony Network Entertainment International LLC, Los Angeles, CA 90045 (US)
(72) Inventor: McCoy, Charles, San Diego, CA 92127-1898 (US); Wong, Ling Jun, San Diego, CA 92127-1898 (US); Xiong, True, San Diego, CA 92127-1898 (US)
(74) Representative: D Young & Co LLP

(56) References cited:
- EP-A1- 2 194 692
- EP-A2- 1 809 029
- US-A1- 2006 041 923
- US-A1- 2008 165 842
- US-A1- 2010 071 076

## Description

This invention relates to web browsers as second display control devices.

Significant mounts of internet media are discovered while browsing the web. Currently it is not convenient to arrange for media seen on a web page to play back on the equipment best suited for reproduction of that media. The traditional method is to view information about the web page, or its source, and copy the media URL so that the URL can be used for playback elsewhere.

Previously proposed arrangements are disclosed in US 2010/071076 A1, EP-A-2 194 692, US 2006/041923 A1, EP-A-1 809 029 and US 2008/165842 A1.

Systems and methods are disclosed as embodiments of the invention for creating and employing software to handle the playback of media, especially video, in web browsers that, in addition to or instead of playing the media in the web browser, use principles and protocols of a "second display" to instruct a content playback device to play the media, e.g., on a device that is optimized for media playback, such as an IPTV or other large television screen and/or on a home theater audio system. In some implementations, the software can be in the form of a browser plug-in or it can be in the form of an application that the browsers is configured to use for the playback of selected media types. Generally, the software only has to play and transmit the selected media or specify the network location of the same to a target device for subsequent playback. The user of a browser plug-in or an application that the browser is configured to use allows significant benefits over prior systems. For example, the system and method may be employed with any device with a browser, and is not tied to any particular proprietary technology. The system and method provide software that can act as a control device to control a consumer electronics device, e.g., a video or audio device, to playback media in place of or in addition to playing that media in the browser.

Embodiments of the system and method may include one or more of the following features: the web browsing experience may be integrated with playback of the included media on a device other than the device used to browse the web. Media embedded in a web page may be configured to play on a consumer electronics device. A media stream from within a browser may be retransmitted to a consumer electronics device for playback, the media stream being buffered by the second display.

To accomplish the above, software is employed in ernbodiments of the invention that is installed, in one implementation, as a browser plug-in or helper application to handle media playback. Variations are discussed above. The helper application may be of a type that is registered with the browser. This software may have the ability to play the media in the browser, like firadifiiooal media handling software, in addition to the ability to control consumer electronics devices to enable the same to play the media. In other implementations, software may specify the network location of selected media to the content playback device. The content playback devices, e.g., consumer electronics devices, may be caused to be the source of the request for a content item from a service provider, e.g., by providing the content item URL to the content playback device from the second display for a subsequent request to a service provider.

In the case that the software is a plug-in within the browser, the browser may provide the media data to the plug-in in a stream. The plug-in can buffer the media stream and direct the content item to the consumer electronics device that it instructed to play the media.

The system and method may be particularly appropriate for redirecting content items which are DRM-free or otherwise freely distributable. For example, the system and method may particularly pertain to movie trailers, publicly available videos, and the like.

To redirect content or to control content playback device settings, a group of users may exploit individual "second displays" to control settings, view, browse, and navigate content or data service offerings, by service providers, e.g., internet network services, on behalf of a content playback device, e.g., IPTV, the same having authenticated credentials for playback of such content, and then arrange for a selected content item or items to be played back on the content playback device.

The second displays serve as a visual aid to the IPTV, but generally do not require additional investment by the user because the same make use of a device, e.g., a smartphone, laptop computer, tablet computer, a desktop, an internet appliance, etc., which most users would already have in their possession. Such a second display is a perfect complement to an IPTV because of the second display's strength in supported languages and character font sets, data entry, processing power, and user experience in content management. The application running on the second display may be a web application (scripting or non-scripting), a native application, a Java application, or any other sort of application that may work with a content playback device. For example, the ASP/.NET framework with RPC can be employed to write the second display application. Where the web application running on the second display is written in HTML or HTML with Javascript, the same may be loaded by any device with a browser, and so the same is not limited to only a small set of compatible devices or expensive remote controls.

Communications with service providers may take place through a proxy server, and the proxy server presents to service providers the authentication credentials of the content playback device, so that the second displays appear to the service providers as an authenticated content playback device.

The second displays may include any device that can run an application that communicates with a content playback device, including, but not limited to, personal computers, laptop computers, notebook computers, netbook computers, handheld computers, personal digital assistants, mobile phones, smart phones, tablet computers, hand-held gaming devices, gaming consoles, and also on devices specifically designed for these purposes, in which case the special device would include at least a processor and sufficient resources and networking capability to run the web application.

The content playback device can take many forms, and multiple content playback devices can be coupled to and selected within a given local network. Exemplary content playback devices may include IPTVs, DTVs, digital audio systems, or more traditional video and audio systems that have been appropriately configured for connectivity. In video systems, the content playback device includes a processor controlling a video display to render content thereon.

In a general method, a user employing a second display has a user account with a source or clearinghouse of services. Here, the source or clearinghouse is represented as a user account on a management server, but it should be understood that the user account may be with a service provider directly. In any event, this account has information stored thereon related to what content playback devices are associated with the account. When a user logs on, they may see this list of content playback devices and may choose a particular content playback device. If there is only one content playback device on the network, or if the user is browsing in a way that the content playback device identity is not needed, then this step may be omitted.

Once a content playback device has been chosen, a list of services may be displayed (if more than one is available). The list of services may be customized to those that have content playable on the chosen content playback device, or all available content may be displayed, in which case, in certain implementations, a notation may be displayed adjacent the content item as to whether it is playable on the selected device. Where no content playback device has been selected, all available content may be displayed. If no content playback device has been selected, but the user account includes stored information about which content playback devices are available, then all content may be displayed, a subset of all content may be displayed based on the known content playback devices associated with the account, or notations may be presented about which content playback devices can play which content, or a combination of these. In some cases, a content service provider may require a content playback device to be chosen. In other cases, no content playback device need be chosen and the user may simply choose and queue content for later playback by a content playback device to-be-determined at a later time.

Assuming multiple services are available, the user then selects a service to browse. The service presents a list of available content items as noted above. The presentation may be in any number of forms, including by category, or in any other form of organization. The proxy server presents an authentication credential of the content playback device to the content server. In some cases, service provider credentials for accessing the various services may be stored in the account, and presented by the proxy server or management server to the content server when needed.

Individual services may employ their own DRM schemes which the current system may then incorporate. For example, if a video content service provider only allows a certain predetermined number of devices on which their content may be played back, then this rule will be enforced or duplicated within the current system and method. Moreover, changes to such service provider parameters may be periodically polled for by the proxy server and/or management server, or the same may be polled for at the next login of the service. In other words, upon login, the system and method may poll for and receive a token associated with the given service provider, the token providing information to the system about the user account with the content service provider.

The system and method may include a management server which, along with the content playback device, communicates with at least one content server such that the content server provides content items for presentation or access of the content item at the content playback device. The system and method may further include a proxy server communicating with the management server and the second displays. In some cases, the proxy server may be merged with the management server, or in other cases a separate proxy server may be provided for each content server or service provider.

In another embodiment, a proxy server includes at least one processor and at least one network interface communicating with the processor to establish communication between the processor and a wide area network. At least one computer-readable storage medium is accessible to the processor and bears logic causing the processor to receive login information from a second display. Responsive to a determination that the login information is correct, the server sends to the second display a local IP address of the content playback device associated with the login information. The proxy server receives from the second display information about the content playback device requesting a list of services available to the content playback device from at least one content server of a service provider and sends a request for the list of services to a management server. The proxy server receives from the management server the list and sends it to the second display for presentation of information on a video display thereof. The proxy server receives from the second display a request for a content item and, responsive to the request of the content item, requests a service login of the content server. The proxy server receives back from the content server a list of items, assets, categories or services and sends the list to the second display. In this way, the list can be presented on a video display of the second display so that a user can navigate to enter a selection to command the content playback device to play the selection.

In one embodiment, the invention is directed toward a method of playing a content item on a content playback device using a second display. The method may include steps of: establishing a browsing session between a second display and a source of content; instantiating a plug-in or helper application on the second display; playing back at least a portion of a content item in the plug-in or helper application, or loading an identifier of the content item in the plug-in or helper application; and causing the content item to play back in a content playback device.

Embodiments of the invention may include one or more of the following. The identifier of the content item may be a URL. The content playback device may be located on a common local network with the second display, and the causing may include transmitting the content item to the content playback device over the local network. The causing may include transmitting the content item to the content playback device over a wired or wireless direct connection. The causing may include buffering the content item. The direct connection may be wireless, and the wireless transmissions scheme may include a scheme selected from the group consisting of: WiFi, 802.11, 802.15, and 802.16. The source of content may be a service provider. The browsing session may be associated with a user account. The helper application may be a web application. The method may further include: transmitting to the second display a list of available service providers; receiving from the second display a selection of a first content item from one of the service providers; placing the first content item in a queue; receiving from the second display a selection of a second content item from another of the service providers; and placing the second content item in a queue. The causing may include causing the content playback device to request the content item.

In another embodiment, the invention is directed toward a non-transitory computer-readable medium, including instructions for causing a computing device to implement the above method.

In another embodiment, the invention is directed toward a second display, the second display including: a display module, the display module providing a user interface and configured to display a content item or to receive a content item URL; a network communications module, the network communications module for coupling the second display to a local network or to a content playback device; and a content item redirection module, the content item redirection module configured to direct the content playback device to play back the content item or a content item associated with the content item URL.

Embodiments of the invention may include one or more of the following. The display may include a web-browsing module for browsing content items. The web-browsing module may be implemented in HTML, Javascript, or a native code. The web-browsing module may include a plug-in or helper application. The content item redirection module may be configured to receive a signal from the plug-in or helper application. The content item redirection module may be configured to buffer the content item and transmit the content item to the content playback device, and the transmission may be via a wireless communication scheme. The content item redirection module may be configured to direct the content playback device to play back a content item associated with the content item URL by transmitting the content item URL to a server.

In another embodiment, the invention is directed toward a second display, including: a processor; memory bearing computer readable instructions capable of loading a plug-in or helper application into a browser; memory bearing computer readable instructions capable of receiving information about, or a portion of, a content item; memory bearing computer readable instructions capable of playing back at least a portion of a content item in the second display; and memory bearing computer readable instructions capable of redirecting the content item from the second display to a content playback device.

Embodiments of the invention may include one or more of the following. The second display may further include memory bearing computer readable instructions capable of buffering the content item. The second display may further include memory bearing computer readable instructions capable of transmitting the content item to the content playback device. The second display may further include memory bearing computer readable instructions capable of causing a content item to be present on a content playback device.

Advantages of certain embodiments of the invention may include one or more of the following. Additional ways are provided to control TVs through a secondary display. Use of a second display affords significant additional features over the case of browsing solely on an IPTV, e.g., certain content items are easier to review and select on a second display than on a content playback device. This capability may be especially useful when a group of viewers are operating multiple second displays, e.g., viewing family pictures or videos, and each wishes to send content items for viewing and sharing to a mutual content playback device, i.e., the device best suited for viewing these content items. Users who are sight-impaired may use zoom functionality to review content items in greater detail prior to sending the same to the content playback device for playback.

The system and method are not tied to any particular technology - generally, any appropriately-configured second display, that can operate an application that can interact with a content playback device, may be employed to control any appropriately-configured content playback device.

Other advantages will be apparent from the description that follows, including the figures and claims.

Embodiments of the invention will now be described with reference to the accompanying drawings, throughout which like parts are referred to by like references, and in which:
Fig. 1 is a block diagram of an exemplary system in accordance with one aspect of the present principles.
Fig. 2 is a sequence diagram illustrating a system and method according to one aspect of the present principles.
Fig. 3 is a flowchart illustrating an exemplary method according to one aspect of the present principles.
Fig. 4 is a block diagram of an exemplary second display system in accordance with one aspect of the present principles.
Fig. 5 is a block diagram of another exemplary second display system in accordance with one aspect of the present principles.
Fig. 6 illustrates an exemplary computing environment, e.g., that of the disclosed second display, proxy server, management server, or content server.

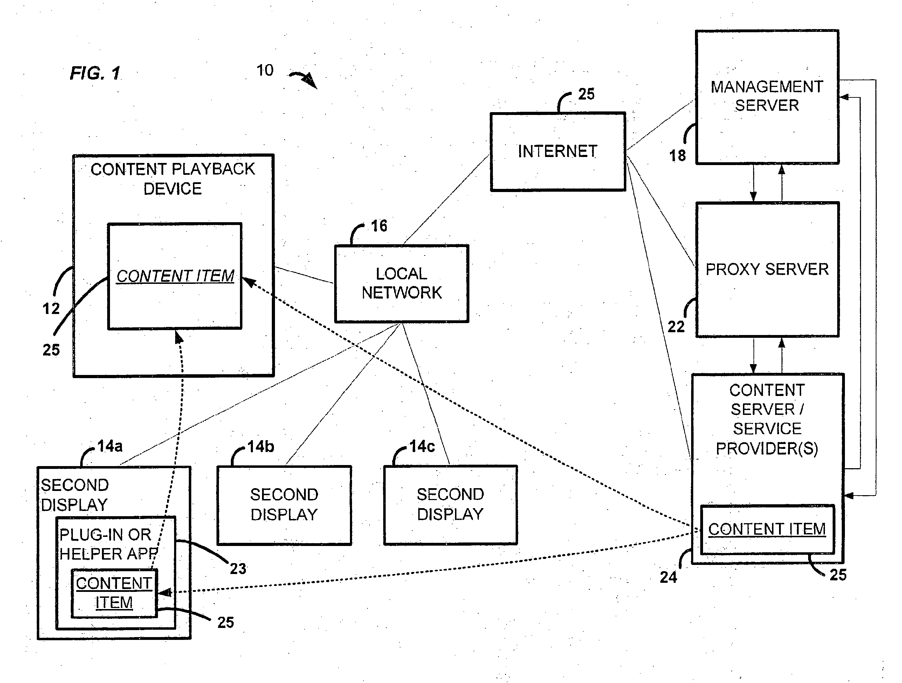

Referring initially to Fig. 1, a system 10 is shown including a content playback device 12 coupled to a local network 16, which may be wired, wireless, or a combination of both. Also coupled to the local network 16 are one or more second displays 14a-14c, an exemplary one of which is termed herein second display 14i. A number of servers may be accessed by the content playback device 12 and the second display 14i through the local network 16 and the internet 25, including a management server 18, a proxy server 22, and one or more content servers 24 corresponding to service providers.

A content item 25 may be stored on a content server 24 and the same may be viewed by a second display 14a. In particular, the content item 25 may be viewed in a plug-in or helper application 23 run in a browser of the second display. The user of the second display 14a can then direct that the content item be displayed in the content playback device 12. In so doing, the user can, e.g., employ a user interface of the plug-in or helper application to indicate the desire for redirection. A signal is then transmitted from the second display 14a to cause the redirection.

The content playback device 12 may obtain the content item 25 for playback in a number of ways. First, the second display 14a may directly transmit the content item 25 to the content playback device 12. This direct transmission may be by way of a direct wired or wireless connection, such as via USB, WiFi, or the like. For such direct transmissions, the second display 14a may act to buffer the media stream constituting the content item 25 in some implementations. Besides direct transmissions, the content playback device 12 may also receive the content item directly from the service provider (or an intermediary source). For this type of transmission, the second display 14a may send a signal to the service provider through the local network 16 and/or internet 25 to the service provider. For example, where the second display application is a web application, the same may include Javascript in HTML that directly passes the desired URL onto the content playback device. If necessary, the proxy server 22 may be employed, although in many cases content items 25 suitable for viewing in plug-in or helper application 23 may be obtained directly from the service provider. Many of these include DRM-free content or other freely-distributable content. In any case, other details about methods by which a second display may request that a content item appear on a content playback device are described below.

The content playback device 12 may be, e.g., an IPTV, a digital TV, a digital sound system, a digital entertainment system, a digital video recorder, a video disc player, a combination of these, or any number of other electronic devices addressable by a user on the local network 16. For the sake of simplicity, in this specification, the content playback device 12 will occasionally be exemplified by an IPTV, in which case it will generally include a processor that controls a visual display and an audio renderer such as a sound processor and one or more speakers. The processor may access one or more computer-readable storage media such as but not limited to RAM-based storage, e.g., a chip implementing dynamic random access memory (DRAM), flash memory, or disk-based storage. Software code implementing present logic executable by the content playback device 12 may also be stored on one of the memories shown to undertake present principles. The processor can receive user input signals from various input devices including a remote control device, a point-and-click device such as a mouse, a keypad, etc. A TV tuner may be provided in some implementations, particularly when the content playback device 12 is embodied by an IPTV, to receive TV signals from a source such as a set-top box, satellite receiver, cable head end, terrestrial TV signal antenna, etc. Signals from the tuner are then sent to the processor for presentation on the display and sound system. A network interface such as a wired or wireless modem communicates with the processor to provide connectivity to the Internet through the local network 16. It will be understood that communications between the content playback device 12 and the internet 25, or between the second display 14i and the internet, may also take place through means besides the local network 16. For example, the second display 14i may communicate with the content playback device 12 through a separate mobile network.

The one or more second displays 14a-14c each bear a processor and components necessary to operate an application, e.g., a browser plug-in or helper application. Other types of applications may also be employed, so long as the same are capable of transmitting (and optionally playing) the selected media or otherwise specifying the network location of the same to a target device for subsequent playback. In particular, the processor in the second display may access one or more computer-readable storage media such as but not limited to RAM-based storage, e.g., a chip implementing dynamic random access memory (DRAM), flash memory, or disk-based storage. Software code implementing present logic executable by the second display may also be stored on one of the memories shown to undertake present principles. Further, the second display 14i can receive user input signals from various input devices including a point-and-click device such as a mouse, a keypad, a touchscreen, a remote control, etc. A network interface such as a wired or wireless modem communicates with the processor to provide connectivity to wide area networks such as the Internet as noted above.

The servers 18, 22, and 24 have respective processors accessing respective non-transitory computer-readable storage media which may be, without limitation, disk-based and/or solid state storage. The servers communicate with a wide area network such as the Internet via respective network interfaces. The proxy server 22 may in some cases be combined with the management server 18, although in many cases it may be preferable to separate the servers to better accommodate server load. The servers may mutually communicate via the internet 25. In some implementations, the servers may be located on the same local network, in which case they may communicate with each other through the local network without accessing the internet. For example, in one exemplary implementation, the management server 18 and the proxy server 22 may be disposed in the same data center, so communication between the two may stay within the data center.

While an exemplary method of the system is described below, certain method steps especially pertinent to certain arrangements of the second display will be described here.

Responsive to the second display 14i sending a request to the proxy server 22 for an executable utility, the proxy server 22 returns the utility to each second display 14i. Running the utility causes the instantiation of an application. The implementation discussed here includes a web application, but it will be understood that other types of applications may also be employed as described above. The second display 14i, executing the web application, prompts a user to input to each second display 14i login information. The login information may be common or may differ between second displays. The proxy server 22, responsive to reception of correct login information from the content playback device 12, returns the local IP address of the content playback device 12 to the second display 14i, because the same has previously been registered to a user account in which such information is maintained. The proxy server 22 may also return a list of content playback devices on the local network, responsive to which the second display 14i may select one for content playback. In turn, each second display 14i uses the local content playback device address to access the content playback device 12 directly to request information about the content playback device 12, which information is returned from the content playback device 12 to the second display 14i such that the local address of the content playback device 12 need not be globally addressable. Each second display 14i may also select content for playback on different content playback devices. The second display 14i sends the information about the content playback device 12 to the proxy server 22, requesting a list of services available to the content playback device 12 from one or more service providers. The services may be dependent on the device characteristics of the content playback device 12 chosen. For example, if the chosen content playback device 12 is an IPTV, video services may be returned. If the chosen content playback device 12 is an audio system, audio services may be returned.

The proxy server 22 relays the request for a list of services to the management server 18, which returns the list to the proxy server 22, with the proxy server 22 in turn sending the list to the second display 14i for presentation of information on the second display 14i. Responsive to a user selection of an item on the list, the second display 14i sends a request for a software asset corresponding to the selected content item to the proxy server 22. The proxy server 22 requests a service login of the content server 24 providing the content, and the content server 24 provides to the proxy server 22 a list of content items, assets, categories, or services, and the proxy server 22 relays the list to the second display 14i, which is presented on the second display 14i so that the user can navigate to enter a selection. Responsive to the selection, the second display 14i sends a command to the content playback device 12 to access and play back the selection.

The command to play the local content item may be in a number of forms. The second display 14i may communicate to the proxy server 22 the request on behalf of the content playback device 12, and this request may be via the local network or via other means. Alternatively, the second display 14i may transmit a request to the content playback device 12 that it itself formulate the request, and this transmission may be by way of the local network, the internet generally, or via other means such as other wired or wireless transmission schemes, including via USB, IR, Bluetooth®, or any other schemes. If the second display 14i is configured to address the content playback device 12 at a non-local level, e.g., at the server level, then the second display 14i may be physically located virtually anywhere and still be able to queue content or to command the content playback device 12 to play content. In this case, however, server load would increase over the case where the second display and content playback device communicated directly or over a local network.

Certain method steps of an arrangement of the content playback device are described here. Using a network interface, the content playback device 12 can communicate with a management server 18 on the Internet and with one or more content servers 24, also on the internet and communicating with the management server 18. The management server 18 receives and stores a local IP address of the content playback device 12. The content playback device 12 communicates with the management server 18 to arrange for content items from the content server 24, operated by a service provider, to be played back on the content playback device 12. In more detail, the content playback device 12 sends login information to the management server 18 which returns to the content playback device 12 a user token that must subsequently be presented by the content playback device 12 to the content server 24 to obtain content from the content server 24.

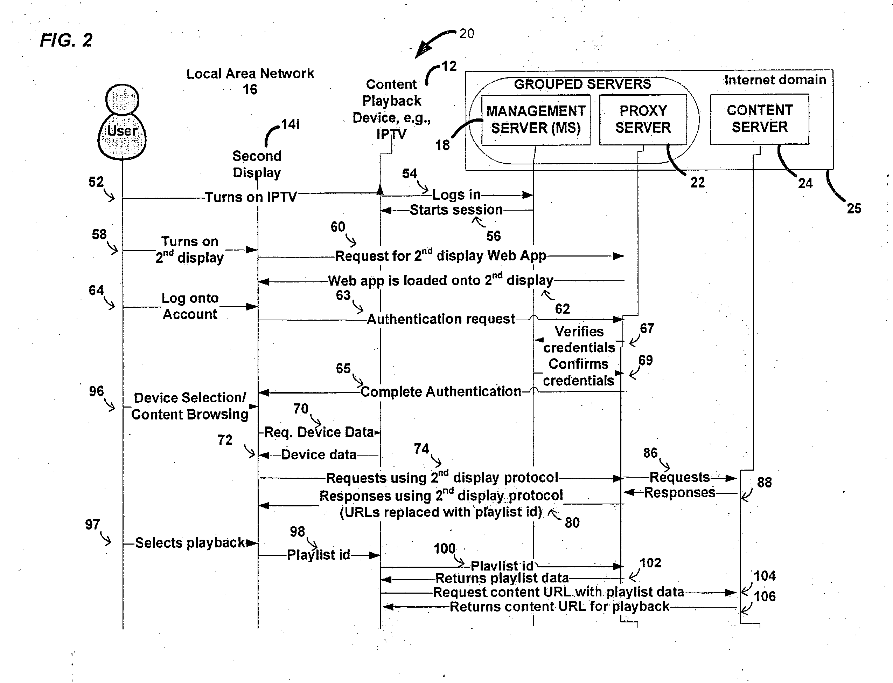

Fig. 2 is a sequence diagram illustrating an exemplary imptementation of the system and method for enabling a user to employ a second display to browse content playback devices, service providers, content items and select the same for playback by a content playback device. Fig. 2 assumes that the user has already created an account with a management server and has affiliated one or more content playback devices with that account.

At state 52, a user turns on the content playback device 12. At state 54 the content playback device sends login information including, e.g., username and password, to the management server 18, which at state 56 returns to the content playback device a user token that may subsequently be presented by the content playback device to a content server 24 to obtain content from that server. The management server 18 in addition stores the local IP address of the content playback device 12.

At state 58, the user turns on the second display 14i and, e.g., instantiates a web browser session in which control may be exercised over the content playback device. A utility is executed on the second display 14i, at state 60, which sends a request to the proxy server 22, which returns in state 62 a web application, e.g., HTML with JavaScript, for the second display to execute for browsing content items. This application may make, e.g., asynchronous JavaScript and XML calls to the proxy server 22 and to the content playback device 12 to obtain information to control the content playback device 12.

With more specificifiy, at state 64, using the JavaScript received from the proxy server 22, the second display 14i prompts the user to input to the second display 14i the account login information, including, e.g., the same username and password that the content playback device provided to the management server 18 in state 54 during device registration. It will be appreciated that the servers 18, 22, and 24 communicate necessary account information between them as needed to realize the principles described here.

The proxy server 22 responds to a correct user name and password from the second display 14i in an authentication request state 63. The proxy server 22 verifies the user name and password with the management server 18 (states 67 and 69), creates and transmits a session token to the second display, obtains information about content playback devices affiliated with the user account, and completes the authentication in state 65. The proxy server 22 may return to each second display the information about all content playback devices 12 that are affiliated with the user account associated with the user name and password, including their locally addresses which were stored by the management server 18 after login at 54 (and subsequently provided to the proxy server 22). In more detail, the proxy server 22 sends a token to the second display 14i, the token associated with a content playback device, and this token gets communicated in future transactions between the second display and the proxy server, so that the proxy server 22 knows what content playback device the content item is intended for. Each user with each second display may then choose a content playback device and browse the services and content options available through the services in state 96 and subsequent steps.

The second display 14i, using the local IP address returned as noted above, accesses the content playback device directly, in the sense of communicating through the local network. To select a particular content playback device, the second display 14i requests information about the content playback device 12 at state 70, including language information, digital rights management (DRM) information, etc., as desired, which information is returned from the content playback device to the second display 14i at state 72. Since the second display 14i knows the IP address of the content playback device 12 and consequently communicates directly with the content playback device 12, the second display 14i communicates using a local web address of the content playback device 12 that need not be globally addressable, and may so communicate as long as the second display 14i and content playback device 12 are on the same local network.

Each second display 14i may send the client information received at state 72 to the proxy server 22, requesting a list of services available to the content playback device 12, or that the content playback device 12 is entitled to, from one or more of the content servers 24. The proxy server 22 relays the request to the management server 18, which returns the requested service list to the proxy server 22. The proxy server 22 in turn sends the services list to the second display for presentation of available services on, e.g., a display of the second display. Each user browses the services and their content on the second display just as though it were the actual content playback device.

A user can input, using, e.g., a second display input device, a selection of a service on the list that was returned to the second display. In response, the second display, at state 74, sends a request for the corresponding service to the proxy server 22 along with the service token that that second display may have received from the content server 24 via the management server 18.

Responsive to the request, the proxy server 22 requests a service login at state 86 of the content server 24 providing the selected service. At state 88, the content server 24 provides to the proxy server 22 a list of content items, assets, categories or services, as the case may be, for the particular content server 24. If desired, the proxy server 22 may also request of the content server 24 a list of options, and the list may be returned in, e.g., extended markup language (XML) format to the proxy server 22 which relays the content items, assets, categories, services, etc. available for selection to the second display at the state 80.

The content available for selection is presented on the second display so that the user can navigate in state 97 the display to enter a selection. Responsive to the selection, the second display at state 98 sends a command to the content playback device 12 to play the selection, and in particular sends a playlist id or reference identifier indicating the selection. At state 100, the content playback device 12, using its authentication credentials, sends the playlist id or reference identifier to the proxy server 22, which returns the required playlist data in state 102. The content playback device 12 can then request the content URL with the playlist data in state 104, which may be responded to with a return of the content URL for playback of the content item on the content playback device 12 in state 106.

Variations of the system and method are now described.

If the content playback device were already playing content, the new content commanded to be played by the second display may be placed in a queue in the content playback device and played when the current content completes. In any case, once the content has been commanded to be played, the user may continue to browse the second display for other content, to play or to add to the queue. Other users may employ their own second displays to do the same. A user may also desire to switch devices and resume playback on a different device by, e.g., navigating to a "recently viewed" list and selecting the last video played after switching control to the desired device.

The above description has been for the case where the proxy server 22 is employed to hide the content source, e.g., a content URL, from the second display 14i. That is, the proxy server 22 provides an API for the second display to use so that the content and/or content URL cannot be accessed directly, i.e., the details of the management server transactions to access the services remain desiredly unknown. In many cases, the second display 14i may have stored thereon little or nothing of the content playback device 12 details. In some cases, however, the URL may be directly provided from the proxy server 22 or the proxy server 22 may even be bypassed, e.g., in cases where the content item is intended for free distribution, e.g., movie trailers or the like. Similarly, while the above description has focused on content item playback on content playback device 12, certain content items, e.g., those which are intended for free distribution, may be played back on the second display 14i itself, if the same has been appropriately configured, e.g., via using the plug-in or helper application described.

In the case where multiple second displays request content to be played at or near the same time, a simple rule such as the first-in-time may prevail. Alternatively, a priority scheme may be configured, such that certain second displays take precedence over other second displays.

Note further that the control device may command the content playback device to play content by sending to the content playback device over the local network commands coded as if they were sent from an infrared remote control, specifically for example the commands may be in Sony Infrared Remote Control System (SIRCS) protocol.

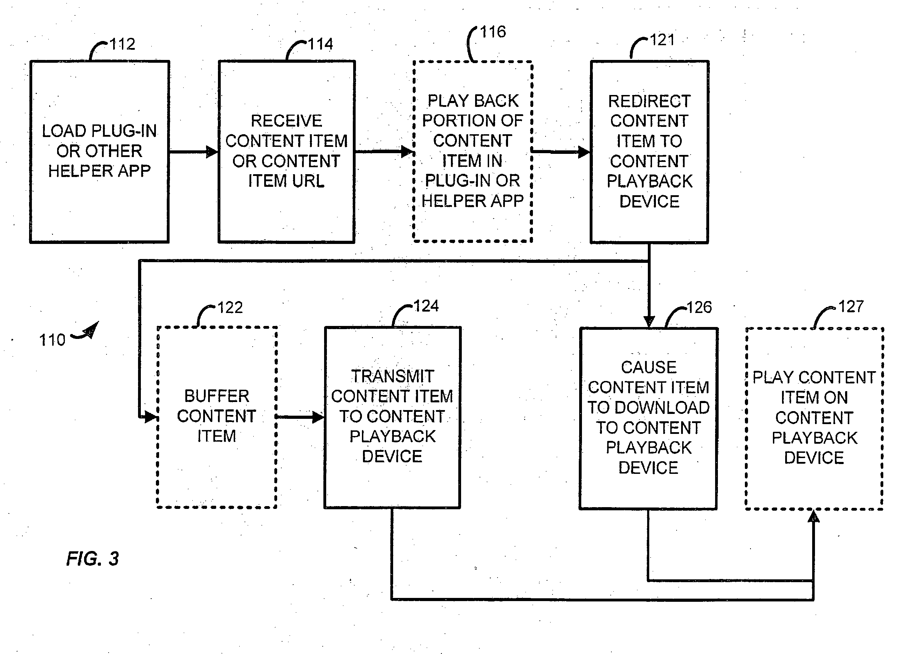

Fig. 3 illustrates one exemplary method 110 by which software may be employed to handle playback of media, especially video, in web browsers that, in addition to or instead of playing the media in the web browser, will use the second display protocol to instruct a separate display device, such as a content playback device, to play the media.

One context of the system and method may be that a user opens a browser window and requests a content item to be played back, although variations will be seen by one of ordinary skill in the art given this teaching. A first step is that the step of requesting a content item loads a plug-in or other helper application into the browser (step 112). A next step is that at least a portion of the content item, or the content item URL or other such identifier, is received at the plug-in or helper application (step 114). A next step, which is optional, is that a portion of the content item is played back in the plug-in or the helper application (step 116). The content item may then be directed or redirected to the content playback device (step 121).

Step 121 may occur in a number of ways. Where the content item is caused to be directly transmitted to the content playback device, an optional step may be performed of buffering the content item (step 122) at the second display. The content item is then transmitted to the content playback device (step 124) using the techniques described above. Where the second display causes the content item to be played back on the content playback device without transmitting the same itself, the content item is caused to download to the content playback device (step 126), such as by providing the content item URL to the content playback device for subsequent retransmission in a request to the service provider for the content item, or the second display may provide details about the content playback device to the service provider to initiate the transmission at the service provider's end. In this event, permission may be obtained from the user prior to playback at the content playback device. In any case, a final step is to play the content item on the content playback device (step 127).

Aspects of various components are described below.

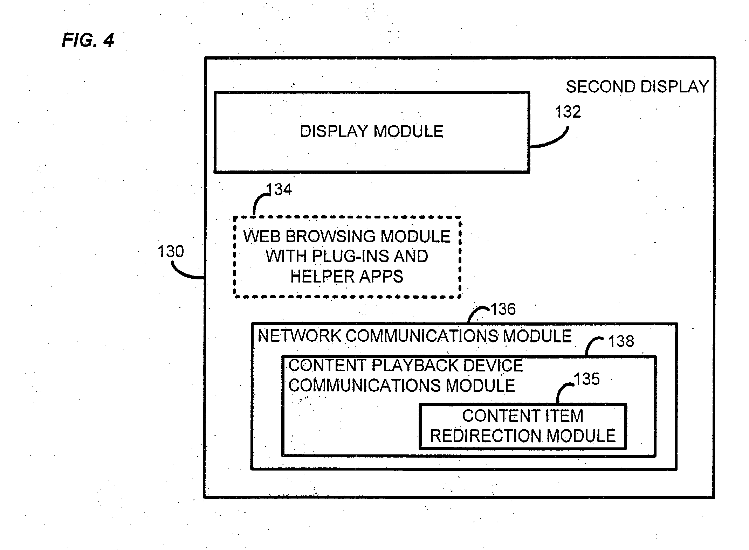

Fig. 4 illustrates one implementation of a second display 130. The second display 130 includes a display module 132 for use in, among other aspects, browsing lists and selecting items related to the content playback device. For example, a list of content playback devices accessible to the local network and/or addressable by the second display may be displayed using the display module 132, and the user may choose a content playback device from among them. In addition to choosing a content playback device, or instead of, a user may review a list of accessible service providers using the display module 132. For example, such service providers may include those offering video-on-demand services for movies and other video content, or any number of other sites on which media and content may be browsed and selected. In one implementation, where a content playback device has been chosen, the results may be filtered based on the capability of the device to render the content. In another implementation, the display module 132 may display not just content accessible to the local network, but also content resident on the local network, such as content stored on a digital video recorder or Blu-ray® player.

Also within the second display 130 may be an optional web-browsing module 134 through which the above noted content items may be browsed in the case where the second display application is written in HTML and Javascript. The web-browsing module 134 may be implemented in a number of ways, including in HTML, Javascript, or the like. A web browsing module implemented in such a way allows the same to be implemented across many platforms, allowing any number of types of second displays to be employed. In some cases, however, special applications, e.g., helper applications, may be employed to communicate with particular proprietary or non-web-based technologies. The web-browsing module 134 may also include various plug-in modules to enable different content types to be played back in the browser itself. Such plug-ins then allow content items to be viewed prior to their redirection to the content playback device. Where the second display application is non-web-based, and is written in, e.g., native code, the web-browsing module 134 may be replaced with a suitable other module allowing service and content selection or other such functionality.

The second display 130 also includes a module for network communications 136. The network communications module 136 allows the second display to communicate with the local network as well as, in some cases, specific devices directly. As part of the network communications module 136, a communications module 138 for communications with a content playback device is provided. The content playback device communications module 138 allows the second display to communicate with the content playback device either over the local network or directly (internet communications may also be employed). Such direct communications may include various types of wired or wireless transmission schemes, including WiFi, USB, infrared, Bluetooth®, or the like.

The content playback device communications module 138 further includes a content item redirection module 135. The content item redirection module 135 takes a signal from a user interface associated with the web browsing module 134 and in particular with the plug-in or helper application within. Upon receipt of a signal that a content item is desired to be played back on the content playback device 12, the content item redirection module 135 employs its coupling with the content playback device, via the content playback device communications module 138, to directly transmit, and if necessary buffer, the content item to the content playback device. As noted above, in another implementation, the content item redirection module 135 may employ network communications, using the network communications module 136, to request that the content item be sent to the content playback device without using the second display as an intermediary. This request may be configured to be from the content playback device itself or initiated by the service provider.

It is noted that the above modules may be implemented in hardware, non-transitory software, or a combination of the above. Typically, the same will be implemented within the context of a laptop computer, a tablet computer, a smart phone, or the like.

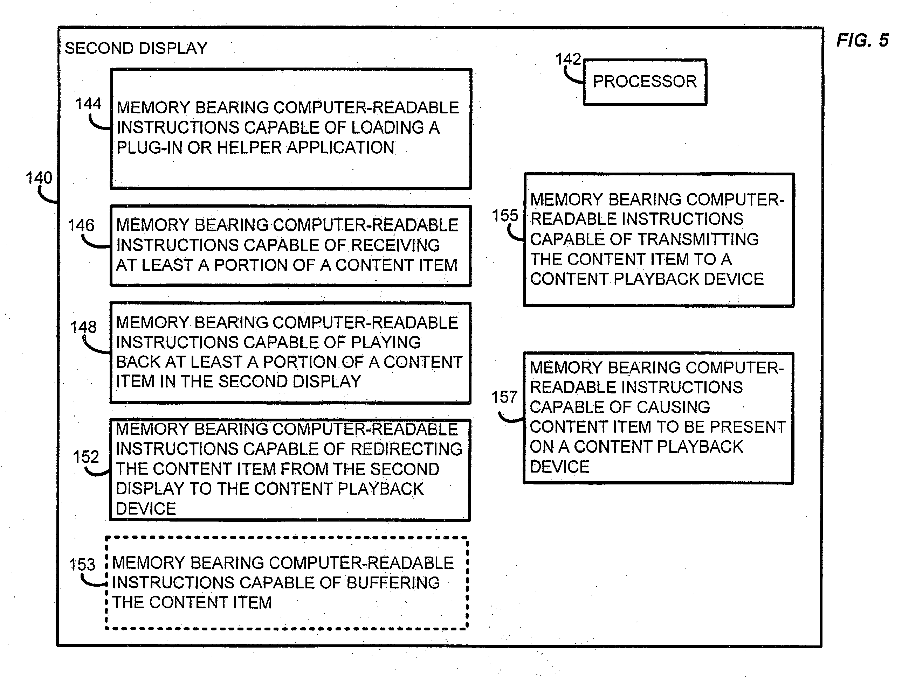

Referring to Fig. 5, another implementation of a second display 140 is illustrated. In this implementation, the second display 140 includes a processor 142. The second display 140 further includes memory 144 bearing computer readable instructions capable of loading a plug-in or other such helper application into a web browser. The second display 140 further includes memory 146 bearing computer readable instructions capable of receiving information about, or a portion of, a content item. The second display 140 further includes memory 148 bearing computer readable instructions capable of playing back at least a portion of a content item in the second display. The second display 140 further includes memory 152 bearing computer readable instructions capable of redirecting the content item from the second display to the content playback device. It is noted in this context that the term redirection does not necessarily mean causing playback to stop on a second display and to restart on a content playback device, although that may be one implementation. The term is generally employed to refer to the playback or at least targeting of a content item on a second display and then causing the content item to download and/or play back on the content playback device.

The second display 140 may further include memory 153 bearing computer readable instructions capable of buffering the content item. The memory 153 is optional, but may be particularly useful when content item data is being directly transmitted from the second display to the content playback device. The second display 140 further includes memory 155 bearing computer readable instructions capable of transmitting the content item to a content playback device. This memory 155 may be used in conjunction with the memory 153 where the content item is directly transmitted. Alternatively, or in combination, the second display 140 may include memory 157 bearing computer readable instructions capable of causing a content item to be present on a content playback device. With memory 157, the content item may be made present by downloading from a service provider, either directly or through a management or proxy server. In this regard, the request for the content item may be configured to be made from the content playback device or from the second display.

Systems and methods have been disclosed that allow improvement of the user experience of the IPTV without adding to the hardware costs of the unit. As disclosed above, software may created and employed to handle the playback of media, especially video, in browsers that, in addition to or instead of playing the media in the browser, may be used to instruct a separate second display to play the media. This software can be in the form of a browser plug-in or it can be in the form of an application that the browser is configured to use for the playback of selected media types.

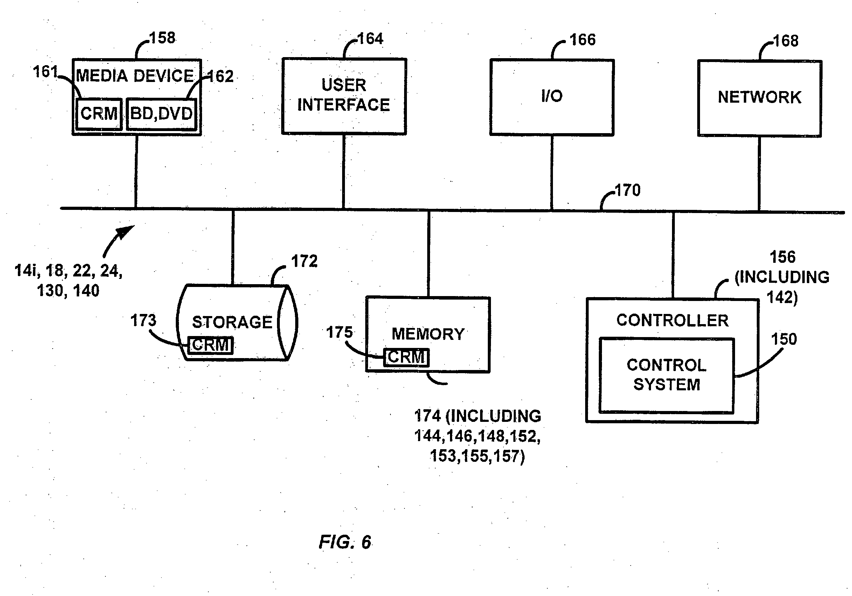

One implementation includes one or more programmable processors and corresponding computing system components to store and execute computer instructions, such as to execute the code that provides the second display or various server functionality, as well as for browsing. The second display 14i functionality will be focused on here, but it will be understood that the various server functionality, e.g., that of the proxy server 22, management server 18, and content server 24, may also be accomplished with such components. Referring to Fig. 6, a representation of an exemplary computing environment for a second display is illustrated. The second display 14i includes a controller 156, a memory 174, storage 172, a media device 158, a user interface 164, an input/output (I/O) interface 166, and a network interface 168. The components are interconnected by a common bus 170. Alternatively, different connection configurations can be used, such as a star pattern with the controller at the center.

The controller 156 includes a programmable processor and controls the operation of the second display 14i and its components for a control and settings system 150. The controller 156 loads instructions from the memory 174 or an embedded controller memory (not shown) and executes these instructions to control the system. In its execution, the controller 156 may provide the second display 14i control of a content playback device system 12 as, in part, a software system. Alternatively, this service can be implemented as separate modular components in the controller 156 or the second display 14i.

Memory 174, which may include non-transitory computer-readable memory 175, stores data temporarily for use by the other components of the second display 14i, and the same may include memories 144, 146, 148, 152, 153, 155, and 157 as discussed above. In one implementation, memory 174 is implemented as RAM. In other implementations, memory 174 also includes long-term or permanent memory, such as flash memory and/or ROM.

Storage 172, which may include non-transitory computer-readable memory 173, stores data temporarily or long-term for use by other components of the second display 14i, such as for storing data used by the system. In one implementation, storage 172 is a hard disc drive or a solid state drive.

The media device 158, which may include non-transitory computer-readable memory 159, receives removable media and reads and/or writes data to the inserted media. In one implementation, the media device 158 is an optical disc drive or disc burner, e.g., a writable Blu-ray@ disc drive 162.

The user interface 164 includes components for accepting user input, e.g., the user content selections, from the user of the second display 14i and presenting information to the user. In one implementation, the user interface 164 includes a keyboard, a mouse, audio speakers, and a display. The controller 156 uses input from the user to adjust the operation of the second display 14i.

The I/O interface 166 includes one or more I/O ports to connect to corresponding I/O devices, such as external storage or supplemental devices, e.g., a printer or a PDA. In one implementation, the ports of the I/O interface 166 include ports such as: USB ports, PCMCIA ports, serial ports, and/or parallel ports. In another implementation, the I/O interface 166 includes a wireless interface for wireless communication with external devices. These I/O interfaces may be employed to connect to one or more content playback devices.

The network interface 168 allows connections with the local network and optionally with content playback device 12 and includes a wired and/or wireless network connection, such as an RJ-45 or Ethernet connection or "WiFi" interface (802.11). Numerous other types of network connections will be understood to be possible, including WiMax, 3G or 4G, 802.15 protocols, 802.16 protocols, satellite, Bluetooth®, or the like.

The second display 14i may include additional hardware and software typical of such devices, e.g., power and operating systems, though these components are not specifically shown in the figure for simplicity. In other implementations, different configurations of the devices can be used, e.g., different bus or storage configurations or a multi-processor configuration.

Various illustrative implementations of the present invention have been described. However, one of ordinary skill in the art will recognize that additional implementations are also possible and within the scope of the present invention. For example, while the application running on the second display has been disclosed as a plug-in or helper application, the same may be a web application, a native application, a Java application, or any other sort of application that may work with a content playback device. Moreover, while several implementations of the invention include that the user select a particular content playback device for playback, in some implementations a user may browse content with no content playback device selected at all. The user may also browse transactions like video rentals or home shopping purchases on the second display. The user may also request content items to be played back that are resident within the local network, e.g., content stored on a DVR or Blu-ray@ player or available via DLNA technology or the like. While the system and method have described implementations in which content playback devices have been selected before browsing and where little or no reference to content playback devices is made, other variations are possible. For example, a cache or cookie or other information may be employed to store information about content playback devices, so that no user choice is necessary. In another example, samples of content items may be obtained from content service providers, and these samples may be browsed freely without a user selection of a content playback device for playback. In another variation, a profile system may be employed that communicates content playback device information upon start-up according to a profile; e.g., a given content playback device may always be associated with and may authenticate itself with a given service provider. In this sense, a content playback device is still being chosen, but the choice does not require an affirmative step by the user. Use of any of these alternatives, or others, ensures that the content consumption of each content playback device is tracked. It further allows, as described, the proxy server to filter out content that the content playback device is incapable of playing. It is also noted that certain types of browsing may require no device at all, e.g., browsing shopping sites. Still, some level of customization may occur, e.g., by consideration of the origination location of the visiting second display's IP address.

Content items from any suitable source are contemplated, including but not limited to: networked, wireless, including 3G, 4G, and the like, local, e.g., from a local or shared drive or accessible via DLNA or accessible via a specialized network storage device, or accessible via removable media such as a media card or USB storage device, CD, DVD, or Blu-ray. Content may also be accessed from a cell phone, portable media player, camera or camcorder, or other devices the second display may access. In addition, any suitable types of content items are contemplated, including but not limited to AC3, MP3, MPEG, etc. Any suitable format of content items is contemplated, including but not limited to m3u, ASX, ASX-XML, etc. Any suitable protection scheme is contemplated, including but not limited to DRM, etc. Any suitable protocol is contemplated, including but not limited to HTTP, HTTPS, etc. Any suitable playback method is contemplated, including but not limited to those varying in buffering limit, when to buffer, treating video playback differently from audio playback, and the like.

In addition, the above description was primarily directed to an implementation in which the local IP address of the second display was retrieved and stored on the server. However, other ways of discovering the second display are also possible. For example, device discovery is also possible using a broadcast method within the local network. Compatible devices that recognize the broadcast message will respond with their necessary credentials and information to indicate their compliance with the web application for the second display. In many cases, broadcasting methods are primarily directed to native applications, not web applications; however, a broadcasting library may be employed to allow the implementation within a web application. In addition, users may be enabled using the systems and methods disclosed to write or configure web applications or web pages to control the playback of media from a computer by content playback devices. The source may also be lists of internet content that the user has discovered on the web or lists of content that others have published on the web. In employing such applications there may on occasion be separate pieces of software written for separate platforms.

While the above description has focused on implementations where a second display is coupled to a content playback device through a local network, it will be understood that the same will apply to any method by which the two may communicate, including 3G, 4G, and other such schemes.

Accordingly, the present invention is not limited to only those implementations described above.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A method of playing a content item on a content playback device (12) having a display using a second display device (14a, b, c) separate to the content playback device, the method comprising:
registering the content playback device with a management server by affiliating account login information at the management server with that content playback device, the management server communicating with a proxy server and at least one source of content such that the source of content provides content items to be played on the content playback device;
the second display device establishing a browsing session in which control may be exercised over the source of content, using the account login information for the content playback device;
instantiating a plug-in or helper application on the second display device;
playing back at least a portion of a content item in the plug-in or helper application, or loading an identifier of the content item in the plug-in or helper aplication;
the proxy server verifying account login information received from the second display device with the management server and creating and transmitting a session token associated with the content playback device to the second display device; and
the second display device presenting the session token to the proxy server as a transaction between the second display device and the proxy server so as to obtain the content item for play back using the display of the content playback device.

2. The method of claim 1, wherein the identifier of the content item is a URL.

3. The method of claim 1, wherein the content playback device is located on a common local network with the second display device, the method comprising transmitting the content item to the content playback device over the local network.

4. The method of claim 1, comprising transmitting the content item to the content playback device over a wired or wireless direct connection, and optionally buffering the content item.

5. The method of claim 1, further comprising:
transmitting to the second display device a list of available service providers;
receiving from the second display device a selection of a first content item from one of the service providers;
placing the first content item in a queue;
receiving from the second display device a selection of a second content item from another of the service providers; and
placing the second content item in a queue.

6. A non-transitory computer-readable medium, comprising instructions for causing a computing device to implement the method of claim 1.

7. A device operable as a second display device separate to a content playback device having a display and being registered with a management server by affiliating account login information at the management server with that content playback device, the management server communicating with a proxy server and at least one source of content such that the source of content provides content items to be played on the content playback device the device comprising:
means for establishing a browsing session in which control may be exercised over the source of content using the account login information for the content playback device;
means for instantiating a plug-in or helper application on the second display device;
means for playing back at least a portion of a content item in the plug-in or helper application, or loading an identifier of the content item in the plug-in or helper application; means for sending an authentication request including account login information to a proxy server
means for receiving, from the proxy server, a session token associated with the content playback device; and
means for presenting the session token to the proxy server as a transaction between the device and the proxy server so as to obtain the content item for play back using the display of the content playback device.

8. A device according to claim 7, comprising:
a display module, the display module providing a user interface and configured to display a content item or to receive a content item URL;
a network communications module, the network communications module for coupling the second display device to the content playback device; and
a content item redirection module, the content item redirection module configured to direct the content playback device to play back the content item or a content item associated with the content item URL.

9. The device of claim 8, further comprising a web-browsing module for browsing content items.

10. The display of claim 9, wherein the content item redirection module is configured to direct the content playback device to play back a content item associated with the content item URL by transmitting the content item URL to a server.

## Patentansprüche

1. Verfahren zum Abspielen eines Inhaltselements auf einer Inhaltswiedergabevorrichtung (12), die eine Anzeigevorrichtung aufweist, unter Verwendung eines zweiten Anzeigegeräts (14a, b, c) getrennt von der Inhaltswiedergabevorrichtung, wobei das Verfahren Folgendes umfasst:
Eintragen der Inhaltswiedergabevorrichtung in einem Managementserver durch Zuordnen von Kontoanmeldeinformationen in dem Managementserver zu dieser Inhaltswiedergabevorrichtung, wobei der Managementserver mit einem Proxyserver und wenigstens einer Inhaltsquelle kommuniziert, so dass die Inhaltsquelle Inhaltselemente, die auf der Inhaltswiedergabevorrichtung abgespielt werden sollen, bereitstellt;
das zweite Anzeigegerät eine Browser-Sitzung, in der eine Steuerung über die Inhaltsquelle ausgeführt werden kann, unter Verwendung der Kontoanmeldeinformationen für die Inhaltswiedergabevorrichtung aufbaut;
Instanziieren einer Plug-In- oder Hilfsanwendung auf dem zweiten Anzeigegerät;
Wiedergeben wenigstens eines Abschnitts eines Inhaltselements in der Plug-In- oder Hilfsanwendung, oder Laden eines Kennzeichens des Inhaltselements in die Plug-In- oder Hilfsanwendung;
wobei der Proxyserver Kontoanmeldeinformationen, die von dem zweiten Anzeigegerät empfangen werden, mit dem Managementserver verifiziert und ein Sitzungs-Token, das der Inhaltswiedergabevorrichtung zugeordnet ist, erzeugt und zu dem zweiten Anzeigegerät sendet; und
das zweite Anzeigegerät das Sitzungs-Token dem Proxyserver als eine Transaktion zwischen dem zweiten Anzeigegerät und dem Proxyserver präsentiert, um das Inhaltselement zur Wiedergabe unter Verwendung der Anzeigevorrichtung der Inhaltswiedergabevorrichtung zu erhalten.

2. Verfahren nach Anspruch 1, wobei das Kennzeichen des Inhaltselements eine URL ist.

3. Verfahren nach Anspruch 1, wobei sich die Inhaltswiedergabevorrichtung mit dem zweiten Anzeigegerät in einem gemeinsam verwendeten lokalen Netz befindet, wobei das Verfahren das Senden des Inhaltselements zu der Inhaltswiedergabevorrichtung über das lokale Netz umfasst.

4. Verfahren nach Anspruch 1, das Senden des Inhaltselements zu der Inhaltswiedergabevorrichtung über eine drahtgebundene oder drahtlose direkte Verbindung und optional Puffern des Inhaltselements umfasst.

5. Verfahren nach Anspruch 1, das ferner Folgendes umfasst:
Senden einer Liste von verfügbaren Dienstanbietern zu dem zweiten Anzeigegerät;
Empfangen von dem zweiten Anzeigegerät einer Auswahl eines ersten Inhaltselements von einem der Dienstanbieter;
Platzieren des ersten Inhaltselements in einer Warteschlange;
Empfangen von dem zweiten Anzeigegerät einer Auswahl eines zweiten Inhaltselements von einem weiteren der Dienstanbieter; und
Platzieren des zweiten Inhaltselements in einer Warteschlange.

6. Nichtflüchtiges computerlesbares Medium, das Anweisungen zum Bewirken enthält, dass eine Computervorrichtung das Verfahren nach Anspruch 1 implementiert.

7. Gerät, das als ein zweites Anzeigegerät arbeitet getrennt von einer Inhaltswiedergabevorrichtung, die eine Anzeigevorrichtung aufweist und in einem Managementserver eingetragen ist durch Zuordnen von Kontoanmeldeinformationen in dem Managementserver zu dieser Inhaltswiedergabevorrichtung, wobei der Managementserver mit einem Proxyserver und wenigstens einer Inhaltsquelle kommuniziert, so dass die Inhaltsquelle Inhaltselemente bereitgestellt, die auf der Inhaltswiedergabevorrichtung abgespielt werden sollen, wobei das Gerät Folgendes umfasst:
Mittel zum Aufbauen einer Browser-Sitzung, in der Steuerung über die Inhaltsquelle ausgeführt werden kann, unter Verwendung der Kontoanmeldeinformationen für die Inhaltswiedergabevorrichtung;
Mittel zum Instanziieren einer Plug-In- oder Hilfsanwendung auf dem zweiten Anzeigegerät;
Mittel zum Wiedergeben wenigstens eines Abschnitts eines Inhaltselements in der Plug-In- oder Hilfsanwendung oder Laden eines Kennzeichens des Inhaltselements in die Plug-In- oder Hilfsanwendung;
Mittel zum Senden einer Authentifizierungsanforderung, die Kontoanmeldeinformationen enthält, zu einem Proxyserver;
Mittel zum Empfangen von dem Proxyserver eines Sitzungs-Token, das der Inhaltswiedergabevorrichtung zugeordnet ist; und
Mittel zum Präsentieren des Sitzungs-Token dem Proxyserver als eine Transaktion zwischen dem Gerät und dem Proxyserver, um das Inhaltselement zur Wiedergabe unter Verwendung der Anzeigevorrichtung der Inhaltswiedergabevorrichtung zu erhalten.

8. Gerät nach Anspruch 7, das Folgendes umfasst:
ein Anzeigemodul, wobei das Anzeigemodul eine Anwenderschnittstelle bereitstellt und konfiguriert ist, ein Inhaltselement anzuzeigen oder eine URL des Inhaltselements zu empfangen;
ein Netzkommunikationsmodul, wobei das Netzkommunikationsmodul zum Koppeln des zweiten Anzeigegeräts mit der Inhaltswiedergabevorrichtung dient; und
ein Inhaltselementumlenkungsmodul, wobei das Inhaltselementumlenkungsmodul dazu dient, die Inhaltswiedergabevorrichtung anzuweisen, das Inhaltselement oder ein Inhaltselement, das der URL des Inhaltselements zugeordnet ist, wiederzugeben.

9. Gerät nach Anspruch 8, das ferner ein Webbrowser-Modul zum Browsen von Inhaltselementen umfasst.

10. Anzeigegerät nach Anspruch 9, wobei das Inhaltselementumlenkungsmodul konfiguriert ist, die Inhaltswiedergabevorrichtung anzuweisen, ein Inhaltselement, das der URL des Inhaltselements zugeordnet ist, wiederzugeben, durch Senden der URL des Inhaltselements zu einem Server.

## Revendications

1. Procédé de reproduction d'un élément de contenu sur un dispositif de reproduction de contenu (12) ayant un afficheur en utilisant un second dispositif d'affichage (14a, b, c) distinct du dispositif de reproduction de contenu, le procédé comprenant :
l'enregistrement du dispositif de reproduction de contenu auprès d'un serveur de gestion en affiliant des informations d'ouverture de compte au niveau du serveur de gestion à ce dispositif de reproduction de contenu, le serveur de gestion communiquant avec un serveur mandataire et au moins une source de contenu de telle sorte que la source de contenu fournisse des éléments de contenu à reproduire sur le dispositif de reproduction de contenu ;
l'affichage par le second dispositif d'affichage d'une session de navigation dans laquelle une commande peut être exercée sur la source de contenu, en utilisant les informations d'ouverture de compte du dispositif de reproduction de contenu ;
l'instanciation d'une application d'extension ou de soutien sur le second dispositif d'affichage ;
la reproduction d'au moins une partie d'un élément de contenu dans l'application d'extension ou de soutien, ou le chargement d'un identifiant de l'élément de contenu dans l'application d'extension ou de soutien ;
la vérification par le serveur mandataire des informations d'ouverture de compte reçues du second dispositif d'affichage auprès du serveur de gestion et la création et la transmission d'un jeton de session associé au dispositif de reproduction de contenu au second dispositif d'affichage ; et
la présentation par le second dispositif d'affichage du jeton de session au serveur mandataire comme transaction entre le second dispositif d'affichage et le serveur mandataire de manière à obtenir l'élément de contenu à reproduire en utilisant l'afficheur du dispositif de reproduction de contenu.

2. Procédé selon la revendication 1, dans lequel l'identifiant de l'élément de contenu est un URL.

3. Procédé selon la revendication 1, dans lequel le dispositif de reproduction de contenu est situé sur un réseau local commun à celui du second dispositif d'affichage, et le procédé comprenant la transmission de l'élément de contenu au dispositif de reproduction de contenu sur le réseau local.

4. Procédé selon la revendication 1, comprenant la transmission de l'élément de contenu au dispositif de reproduction de contenu sur une connexion directe filaire ou sans fil, et le tamponnage éventuel de l'élément de contenu.

5. Procédé selon la revendication 1, comprenant en outre :
la transmission au second dispositif d'affichage d'une liste de fournisseurs de services possibles ;
la réception depuis le second dispositif d'affichage d'une sélection d'un premier élément de contenu depuis l'un des fournisseurs de services ;
la mise en file d'attente du premier élément de contenu ;
la réception depuis le second dispositif d'affichage d'une sélection d'un second élément de contenu depuis un autre des fournisseurs de services ; et
la mise en file d'attente du second élément de contenu.

6. Support lisible par ordinateur non transitoire, comprenant des instructions pour amener un dispositif informatique à mettre en oeuvre le procédé selon la revendication 1.

7. Dispositif exploitable comme second dispositif d'affichage distinct d'un dispositif de reproduction de contenu ayant un afficheur et enregistré auprès d'un serveur de gestion en affiliant des informations d'ouverture de compte au niveau du serveur de gestion à ce dispositif de reproduction de contenu, le serveur de gestion communiquant avec un serveur mandataire et au moins une source de contenu de telle sorte que la source de contenu fournisse des éléments de contenu à reproduire sur le dispositif de reproduction de contenu, le dispositif comprenant un moyen d'établissement d'une session de navigation dans laquelle une commande peut être exercée sur la source de contenu en utilisant les informations d'ouverture de compte du dispositif de reproduction de contenu ;
un moyen d'instanciation d'une application d'extension ou de soutien sur le second dispositif d'affichage ;
un moyen de reproduction d'au moins une partie d'un élément de contenu dans l'application, ou le chargement d'un identifiant de l'élément de contenu dans l'application ;
un moyen d'envoi d'une requête d'authentification comportant des informations d'ouverture de compte à un serveur mandataire ;
un moyen de réception, depuis le serveur mandataire, d'un jeton de session associé au dispositif de reproduction de contenu ; et
un moyen de présentation du jeton de session au serveur mandataire comme transaction entre le dispositif et le serveur mandataire de manière à obtenir l'élément de contenu à reproduire en utilisant l'afficheur du dispositif de reproduction de contenu.

8. Dispositif selon la revendication 7, comprenant :
un module d'affichage, le module d'affichage fournissant une interface utilisateur et configuré pour afficher un élément de contenu ou recevoir un URL d'élément de contenu ;
un module de communications de réseau, le module de communications de réseau servant à coupler le second dispositif d'affichage au dispositif de reproduction de contenu ; et
un module de réacheminement d'élément de contenu, le module de réacheminement d'élément de contenu étant configuré pour ordonner au dispositif de reproduction de contenu de reproduire l'élément de contenu ou un élément de contenu associé à l'URL d'élément de contenu.

9. Dispositif selon la revendication 8, comprenant un module de navigation sur la Toile servant à consulter des éléments de contenu.

10. Afficheur selon la revendication 9, dans lequel le module de réacheminement d'élément de contenu est configuré pour ordonner au dispositif de reproduction de contenu de reproduire un élément de contenu associé à l'URL d'élément de contenu en transmettant l'URL d'élément de contenu à un serveur.
